Europäisches Patentamt

European Patent Office

Office européen des brevets

(19)

(11) Publication number: **0 151 858**
**B1**

(12) **EUROPEAN PATENT SPECIFICATION**

(45) Date of publication of patent specification: **27.04.88**

(21) Application number: **84306738.0**

(22) Date of filing: **03.10.84**

(51) Int. Cl.⁴: **F 16 D 23/04,** F 16 D 27/10,
B 60 K 23/08

(54) **Magnetically synchronized clutch apparatus.**

(30) Priority: **03.11.83 US 548589**

(43) Date of publication of application:
**21.08.85 Bulletin 85/34**

(45) Publication of the grant of the patent:
**27.04.88 Bulletin 88/17**

(84) Designated Contracting States:
**DE FR GB IT**

(56) References cited:
**DE-B-1 073 249**
**FR-A- 908 008**
**FR-A-1 099 137**
**FR-A-1 197 219**
**GB-A- 844 941**
**GB-A-2 088 975**
**US-A-2 584 116**
**US-A-2 940 570**
**US-A-4 192 411**
**US-A-4 281 749**
**US-A-4 300 667**

(73) Proprietor: **BORG-WARNER CORPORATION**
**200 South Michigan Avenue**
**Chicago Illinois 60604 (US)**

(72) Inventor: **Fogelberg, Mark John**
**92 W. Balsam**
**Muncie Indiana 47302 (US)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

## Description

This invention relates to a magnetically synchronized clutch apparatus.

In FR—A—1099137 there is generally disclosed a magnetically synchronized clutch apparatus comprising a jaw clutch and an electromagnetic synchronizer, the jaw clutch including a rotatable sleeve member and a rotatable shift assembly, the shift assembly having a shift collar and a shift member, the shift assembly being slidable to a disengaged position in which the shift member is disengaged from the sleeve member, the shift assembly also being slidable to an engaged position in which the shift member is engaged with the sleeve member with the shift and sleeve members brought into approximate rotational synchronism by an electromagnetic synchronizer which is energizeable upon sliding of the shift assembly towards the engaged position.

More particularly, the clutch apparatus of FR—A—1099137 is so constructed that after the shift assembly has been slid to the engaged position, an operator must continue to exert control pressure to fully initiate clutch engagement.

In accordance with the present invention as claimed, the aforesaid generally disclosed clutch apparatus is characterized by the provision of spring means between the shift collar and the shift member and which, when the shift assembly has been slid to the engaged position but in a period prior to when the shift and sleeve members have been brought into approximate rotational synchronism by the electromagnetic synchronizer, is compressed between the shift collar and the shift member to react against the shift collar and bias the shift member towards the sleeve member for engagement therewith when the shift and sleeve members have been brought into approximate rotational synchronism by the electromagnetic synchronizer.

An advantage of the clutch apparatus of the invention as compared with that of FR—A—1099137 is that the operator merely has to move the shift assembly to the engaged position to initiate clutch engagement. Thereafter, the spring loaded shift member will complete engagement when conditions permit, that is to say the electromagnetic synchronizer has brought the shift and sleeve members into approximate rotational synchronism.

Preferably, in the clutch apparatus of the invention the electromagnetic synchronizer comprises a first pole piece secured to the sleeve member for rotation therewith, a second pole piece secured to the shift collar for rotation and sliding movement therewith, and a coil associated with one of the first and second pole pieces and energizeable upon sliding of the shift assembly towards the engaged position to magnetically engage the first and second pole pieces together thereby to bring the shift member and the sleeve member into approximate rotational synchronism.

A magnetically synchronized clutch apparatus constructed in accordance with the invention may advantageously be incorporated in an automotive four-wheel drive transfer case for the delivery of power to the front and rear wheels.

The transfer case generally delivers power directly to one axle, usually the rear axle, and conventionally includes a clutch which is engageble for the delivery of power to the front axle. The vehicle may be equipped with automatic wheels hubs which lock the front wheels to the front axle upon initial rotation thereof. Under normal operating conditions, the vehicle is driven in the two-wheel-drive operating mode; that is, with power delivered to the rear driveline only. The front driveline is stationary, with the automatic wheel hubs unlocked. In this operating mode maximum fuel economy may be achieved.

When driving conditions require use of the four-wheel-drive operating mode, the conventional transfer case clutch is engaged so as to deliver power to the front driveline. Upon initial rotation of the front axle, the wheel hubs lock to complete the torque delivery path to the front wheels. A disadvantage of this arrangement is that the clutch cannot be engaged at any appreciable vehicle speed without risking damage and/ or a potentially dangerous condition, because at such a speed the rear driveline is rotating rapidly and the front driveline is stationary. The vehicle must be moving slowly (below approximately 5 mph) if the clutch is to be engaged without such risks, and without the expenditure of undue force by the vehicle operator.

There is a need in the art for a clutch apparatus which overcomes this disadvantage by being engageable safely at any vehicle speed, and which is fully engageable without necessitating extraordinary effort by the vehicle operator, and this need is met by the clutch apparatus of the present invention.

When the present clutch apparatus is used in combination with a four-wheel-drive transfer case having an input shaft, a first output shaft establishing a first torque delivery path from the input shaft to a first (rear) pair of wheels through a first (rear) axle, and a second output shaft engageable with the input shaft for establishing a second torque delivery path from the input shaft to a second (front) pair of wheels through a second (front) axle and a pair of automatic wheel hubs, the input shaft is engaged with the second output shaft upon engagement of the shift member with the sleeve member.

Preferably, the sleeve member is rotatable with the first output shaft and the shift assembly including the shift member is rotatable with the second output shaft, so that the initiation of clutch engagement brings the first and second utput shafts into approximate rotational synchronism before the shift and sleeve members will engage to complete clutch engagement which rotationally couples the second output shaft with the first output shaft and hence with the input shaft.

In order that the invention may be well under-

stood there will now be described an embodiment thereof, given by way of example, reference being made to the accompanying drawing, in which:

Figure 1 is a schematic illustration showing the relationship of a four-wheel-drive transfer case and automatic wheel hubs;

Figure 2 is a sectional view of a magnetically synchronized clutch apparatus embodying the present invention in the disengaged position;

Figure 3 is a sectional view similar to Figure 2, showing the same clutch apparatus in the engaged position, but with the clutch not yet engaged; and

Figure 4 is a sectional view similar to Figure 3, showing the same clutch apparatus in the engaged position, with the clutch engaged.

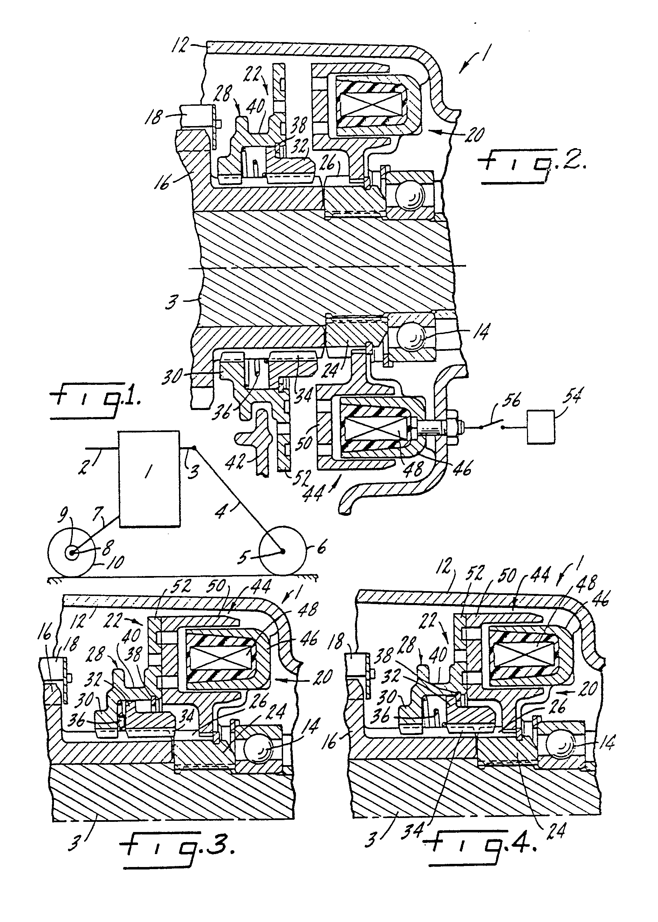

Referring first to FIGURE 1, a transfer case 1 adapted for use in a four-wheel-drive vehicle receives power through an input shaft 2. When operating in the two-wheel-drive mode, the transfer case 1 delivers power through a first output shaft 3 and a driveshaft 4 to an axle 5, for example the rear axle, for driving the rear wheels 6. When operating in the four-wheel-drive mode, the transfer case 1 also delivers power through a second output shaft 7 to another axle 8, for example the front axle, and a pair of automatic wheel hubs 9 for driving the front wheels 10. Suitable automatic wheel hubs are disclosed in US—A—4 192 411, US—A—4 281 749 and US—A—4 300 677, which disclosures are incorporated herein by reference.

As shown in FIGURE 2, the transfer case 1 includes a housing 12 supporting a bearing 14. The shaft 3 is journalled in the bearing 14, and extends from the housing 12 for connection to the rear axle 5 of the vehicle. A drive element 16 in the form of a drive sprocket is journalled on the shaft 3. The drive sprocket 16 is coupled by a chain 18 with a driven sprocket (not shown) connected to the shaft 7 and the front axle 8 of the vehicle.

A magnetically synchronized clutch apparatus 20 includes a spring-loaded jaw clutch 22. The jaw clutch 22 has a sleeve member 24 secured to the shaft 3 for rotation therewith. The sleeve member 24 defines a first set of clutch teeth 26. The jaw clutch 22 also has a shift assembly 28 including a shift collar 30 and a shift member 32. The shift collar 30 and the shift member 32 are splined to the sprocket 16 for rotation therewith and sliding movement relative thereto. The spline of the shift member 32 defines a second set of clutch teeth 34 adapted for meshing engagement with the teeth 26 of the sleeve member 24. The shift assembly 28 also includes a biasing spring 36 which when compressed reacts against the collar 30 and acts upon the shift member 32, biasing it toward a stop 38 in the form of a snap ring or the like supported by the collar 30. It should be noted that although the spring 36 thus loads the shift member 32, it does not load the shift assembly 28 which is freely slidable relative to the sprocket 16.

The shift collar 30 defines an annual groove 40 with which a shift fork 42 is engaged. A shift device (not shown) slides the shift fork 42 to the right from the position shown in FIGURE 2 in order to initiate engagement of the jaw clutch 22, and to the left, back to the position shown in FIGURE 2, in order to disengage the jaw clutch 22. A suitable shift device is disclosed in our US—A—4 531 423 published July 30, 1985.

The clutch apparatus 20 also includes an electromagnetic synchronizer 44. The synchronizer 44 has a case 46 secured to the housing 12. The case 46 contains a coil 48. A first pole piece 50 in the form of a rotor is secured to the sleeve member 24 for rotation with the shaft 3. A second pole piece 52 in the form of an armature is defined by or secured to the collar 30 for rotation with the sprocket 16.

As shown in FIGURE 2, the transfer case 1 is in the two-wheel-drive operating mode. Power may be directed from the shaft 3 to the rear driveline. The jaw clutch 22 is disengaged, so power cannot be directed from the shaft 3 to the front driveline.

The operator may shift the transfer case 1 to the four-wheel-drive operating mode at any vehicle speed. To do so, he moves the shift device so as to slide the shift fork 42, and thus the shift assembly 28, to the engaged position shown in FIGURE 3. It should be noted that no further effort by the operator is required once this shift has been initiated. Positive engagement may be delayed momentarily, however, as the sleeve member 24 is rotating and the shift member 32 is not. When they come into contact, the teeth 34 ratchet against the teeth 26. The spring 36 is compressed, thereby applying a preload biasing force on the shift member 32, urging it towards engagement with the sleeve member 24.

Movement of the shift device also closes a switch 56 to complete a circuit connecting a suitable power source 54 to the coil 48. A convenient switch might be the indicator light switch disclosed in the aforementioned US—A—4 531 423. When the coil 48 is energized, it develops a magnetic flux which draws the armature 52 towards the rotor 50. The armature 52 is thus magnetically engaged with the rotor 50, and may be frictionally engaged with it as well. As the rotor 50 is rotating, the armature 52 also begins rotating. The shift assembly 28 and the front driveline rotate with the armature 52, and the wheel hubs 9 begin the process of locking the wheels 10 to the axle 8. At this point, very little torque is transferred through the synchronizer 44, so the shift member 32 remains freely slidable relative to the sprocket 16.

Although there is some initial slip, the armature 52 accelerates quite rapidly until it approaches synchronism with the rotor 50. When the slip is reduced sufficiently such that the sleeve and shift members 24 and 32 are in approximate synchronism, the teeth 34 slide into meshing engagement with the teeth 26 under the influence of biasing spring 36, as shown in FIGURE 4. At this point, positive engagement between the shaft 3 and the sprocket 16 is completed. Full torque is transferred through the jaw clutch 22. No torque is transferred through the synchronizer 44, and the power source 54 may be disconnected from the coil 48 if desired. Meanwhile, the wheel hubs 9 complete the process of locking the wheels 10 to the axle 8 if they have not already done so.

When the operator desires to shift the transfer case 1 to the two-wheel-drive operating mode, he causes the power source 54 to be disconnected from the coil 48 if it has not already been disconnected. He also causes the shift fork 42 to move leftwardly to the disengaged position shown in FIGURE 2. This draws the shift member 32 away from the sleeve member 24, sliding the teeth 34 out of meshing engagement with the teeth 26. Torque cannot be transferred to the front driveline, so the front axle 8 does not rotate. The wheel hubs 9 now may be unlocked in the manner disclosed in the aforementioned US—A—4 192 411, US—A—4 281 749 and US—A—4 300 667 all of which are owned by the present applicant.

Thus it will be seen that a magnetically synchronized clutch apparatus 20 is engageable at any vehicle speed. The clutch apparatus 20 includes a jaw clutch 22 and an electromagnetic synchronizer 44. The jaw clutch 22 is spring-loaded when engagement is initiated. The synchronizer 44 brings two jaw clutch members 24, 32 into approximate synchronism, whereupon engagement is completed automatically. The synchronizer 44 supplies only the relatively small amount of torque required to bring the clutch members 24, 32 into approximate synchronism, after which full load torque is transferred through the jaw clutch 22.

## Claims

1. A magnetically synchronized clutch apparatus comprising a jaw clutch (22) and an electromagnetic synchronizer (44), the jaw clutch including a rotatable sleeve member (24) and a rotatable shift assembly (28), the shift assembly having a shift collar (30) and a shift member (32), the shift assembly being slidable to a disengaged position in which the shift member is disengaged from the sleeve member, the shift assembly also being slidable to an engaged position in which the shift member is engaged with the sleeve member with the shift and sleeve members brought into approximate rotational synchronism by an electromagnetic synchronizer which is energizeable upon sliding of the shift assembly towards the engaged position, characterised by the provision of spring means (36) between the shift collar (30) and the shift member (32) and which, when the shift assembly (28) has been slid to the engaged position but in a period prior to when the shift and sleeve members have been brought into approximate rotational synchronism by the electromagnetic synchronizer (44), is compressed between the shift collar and the shift member to react against the shift collar and bias the shift member towards the sleeve member (24) for engagement therewith when the shift and sleeve members have been brought into approximate rotational synchronism by the electromagnetic synchronizer.

2. A magnetically synchronized clutch apparatus as claimed in claim 1, wherein the sleeve member (24) and the shift member (32) each define a set of clutch teeth (26, 34), the clutch teeth ratcheting when the shift assembly (28) is in the engaged position but the shift and sleeve members are not in approximate rotational synchromism, and the clutch teeth of the shift member being slidable into meshing engagement with the clutch teeth of the sleeve member under the bias of the spring means (36) when the shift and sleeve members are in approximate rotational synchronism.

3. A magnetically synchronized clutch apparatus as claimed in claim 1 or claim 2, wherein the electromagnetic synchronizer (44) comprises a first pole piece (50) secured to the sleeve member 24 for rotation therewith, a second pole piece (52) secured to the shift collar (30) for rotation and sliding movement therewith, and a coil (48) associated with one of the first and second pole pieces and energizeable upon sliding of the shift assembly (28) towards the engaged position to magnetically engage the first and second pole pieces together thereby to bring the shift member (32) and the sleeve member (34) into approximate rotational synchronism.

4. A magnetically synchronized clutch apparatus as claimed in any of the preceding claims in combination with a four-wheel-drive transfer case (1) having an input shaft (2), a first output shaft (3) establishing a first torque delivery path from the input shaft to a first pair of wheels (6) through a first axle (5), and a second output shaft (7) engageable with the input shaft for establishing a second torque delivery path from the input shaft to a second pair of wheels (10) through a second axle (8) and a pair of automatic wheel hubs (9), the input shaft being engaged with the second output shaft upon engagement of the shift member (32) with the sleeve member (24).

5. A magnetically synchronized clutch apparatus as claimed in claim 4, wherein the sleeve member (24) is rotatable with the first output shaft (3), and the shift assembly (28) including the shift member (32) is rotatable with the second output shaft (7).

## Patentansprüche

1. Magnetisch synchronisierte Kupplungseinrichtung mit einer Klauenkupplung (22) und einem elektromagnetischen Synchronisierer (44), wobei die Klauenkupplung eine drehbare Hülse (24) und eine drehbare Schaltanordnung (28) enthält, die einen Schaltbund (30) und ein Schaltteil (32) aufweist und in eine ausgerückte Stellung, in der das Schaltteil und die Hülse ausgerückt sind, sowie in eine eingerückte Stellung gleitbar ist, in der das Schaltteil und die Hülse eingerückt sind, wobei das Schaltteil und die Hülse von einem elektromagnetischen Synchronisierer in annähernden Drehgleichlauf bringbar sind, der beim Rutschen der Schaltanordnung in die eingerückte Stellung erregbar ist, dadurch gekennzeichnet, daß zwischen dem Schaltbund (30) und dem Schaltteil (32) eine Feder (36) vorgesehen ist, die nach dem Rutschen der Schaltanordnung (28) in die eingerückte Stellung, jedoch in einem Zeitraum, bevor das Schaltteil und die Hülse von dem elektromagnetischen Synchronisierer (4) in annähernden Drehgleichauf gebracht wurden, zwischen dem Schaltbund und dem Schaltteil zusammengedrückt wird, um entgegen dem Schaltbund zur wirken und das Schaltteil gegen die Hülse (24) zum Eingriff mit letzterer vorzuspannen, wenn das Schaltteil und die Hülse von dem elektromagnetischen Synchronisierer in annähernden Drehgleichlauf gebracht worden sind.

2. Einrichtung nach Anspruch 1, dadurch gekennzeichnet, daß die Hülse (24) und das Schaltteil (32) jeweils einen Satz von Kupplungszähnen (26, 34) bilden, wobei die Kupplungszähne sperren, wenn die Schaltanordnung (28) in der eingerückten Stellung ist, die Hülse und das Schaltteil jedoch nicht in annäherndem Drehgleichauf sind, und wobei die Kupplungszähne des Schaltteils unter der Vorspannung durch die Feder (36) in kämmenden Eingriff mit den Kupplungszähnen der Hülse gleitbar sind, wenn die Hülse und das Schaltteil annähernden Drehgleichlauf aufweisen.

3. Einrichtung nach Anspruch 1 oder 2, dadurch gekennzeichnet, daß der elektromagnetische Synchronisierer (44) ein erstes Polstück (50), das an der Hülse (24) zur gemeinsamen Drehung befestigt ist, ein zweites Polstück (52), das am Schaltbund (30 zur gemeinsamen Drehung und Gleitbewegung befestigt ist, und eine Spule (48) enthält, die dem ersten oder zweiten Polstück zugeordnet und betätigbar ist, wenn die Schaltanordnung (28) in die eingerückte Stellung gleitet, um das erste Polstück mit dem zweiten magnetisch in Eingriff zu bringen, wodurch das Schaltteil (32) und die Hülse (34) in annähernden Drehgleichlauf gebracht werden.

4. Einrichtung nach einem der vorhergehenden Ansprüche in Verbindung mit einem Vierradantriebs-Übertragungsgetriebe (1) mit einer Eingangswelle (2), einer ersten Ausgangswelle (3), die einen ersten Drehmomentabgabepfad von der Eingangswelle zu einem ersten Paar von Rädern (6) über eine erste Achse (5) herstellt, und eine zweiten Ausgangswelle (7), die mit der Eingangswelle in Eingriff bringbar ist, um einen zweiten Drehmomentabgadepfad von der Eingangswelle zu einem zweiten Paar von Rädern (10) über eine zweite Achse (8) und zwei automatische Radnaben (9) herzustellen, wobei die Eingangswelle mit der zweiten Ausgangswelle gekuppelt ist, wenn das Schaltteil (32) mit der Hülse (24) in Eingriff steht.

5. Einrichtung nach Anspruch 4, dadurch gekennzeichnet, daß die Hülse (24) mit der ersten Ausgangswelle (3) drehbar ist und daß die Schaltanordnung (28), die das Schaltteil (32) enthält, mit der zweiten Ausgangswelle (7) drehbar ist.

## Revendications

1. Embrayage à synchronisation magnétique comprenant un embrayage à mâchoire (22) et un synchroniseur électromagnétique (44), l'embrayage à mâchoire comportant un élément de manchon rotatif (24) et un ensemble rotatif de sélection (28), l'ensemble de sélection ayant un collier de sélection (20) et un élément de sélection (32), l'ensemble de sélection pouvant coulisser jusqu'à une position désengagée dans laquelle l'élément de sélection est désengagé de l'élément de manchon, l'ensemble de sélection pouvant également coulisser jusqu'à une position engagée dans laquelle l'élément de sélection est engagé avec l'élément de manchon avec les éléments de sélection et de manchon amenés en synchronisme rotationnel approché par un synchroniseur électromagnétique qui peut être excité lors du coulissement de l'ensemble de sélection vers la position engagée, caractérisé par la présence d'un moyen de ressort (36) entre le collier de sélection (30) et l'élément de sélection (32) et qui, lorsque l'ensemble de sélection (28) a été amené par coulissement jusqu'à la position engagée mais dans une période précédant le moment où les éléments de sélection et de manchon ont été amenés en synchronisme rotationnel approché par le synchroniseur électromagnétique (44), est comprimé entre le collier de sélection et l'élément de sélection pour réagir contre le collier de sélection et solliciter l'élément de sélection vers l'élément de manchon (24) pour engagement avec celui-ci lorsque les éléments de sélection et de manchon ont été amenés en synchronisme rotationnel approché par le synchroniseur électromagnétique.

2. Embrayage à synchronisation magnétique selon la revendication 1, dans lequel l'élément de manchon (24) et l'élément de sélection (32) définissent chacun un jeu de dents d'embrayage (26, 34) les dents d'embrayage s'encliquetant lorsque l'ensemble de sélection (28) se trouve dans la position engagée mais que les éléments de sélection et de manchon ne sont pas en synchronisme rationnel approché, et les dents d'embrayage de l'élément de sélection pouvant coulisser jusqu'à une venue en prise avec les dents d'embrayage de l'élément de manchon sous la sollicitation du moyen de ressort (36) lorsque les éléments de sélection et de manchon sont en synchronisme rotationnel approché.

3. Embrayage à synchronisation magnétique selon la revendication 1 ou la revendication 2, dans lequel le synchroniseur électromagnétique (44) comprend une première pièce polaire (50) fixée à l'élément de manchon (24) pour tourner avec lui, une seconde pièce polaire (52) fixée au collier de sélection (30) pour rotation et mouvement coulissant avec lui, et une bobine (48) associée à l'une des première et seconde pièces polaires et pouvant être excitée lors du coulissement de l'ensemble de sélection (28) vers la position engagée afin d'engager magnétiquement les première et seconde pièces polaires ensemble et amener ainsi l'élément de sélection (32) et l'élément de manchon (34) en synchronisme rotationnel approché.

4. Embrayage à synchronisation magnétique selon l'une quelconque des revendications précédentes, en combinaison avec un boîtier de transfert (1) d'une commande à quatre roues motrices ayant un arbre d'entrée (2), un premier arbre de sortie (3) établissant un premier trajet de fourniture de couple entre l'arbre d'entrée et une première paire de roues (6) par l'intermédiaire d'un premier essieu (5), et un second arbre de sortie (7) pouvant être engagé avec l'arbre d'entrée pour établir un second trajet de fourniture de couple entre l'arbre d'entrée et une seconde paire de roues (10) par l'intermédiaire d'un second essieu (8) et une paire de moyeux de roue automatiques (9), l'arbre d'entrée étant engagé avec le second arbre de sortie lors de l'engagement de l'élément de sélection (32) avec l'élément de manchon (24).

5. Embrayage à synchronisation magnétique selon la revendication 4, dans lequel l'élément de manchon (24) peut tourner avec le premier arbre de sortie (3), et l'ensemble de sélection (28) comprenant l'élément de sélection (32) peut tourner avec le second arbre de sortie (7).

fig.2.

fig.1.

fig.3.

fig.4.